# EUROPÄISCHE PATENTSCHRIFT

(11) **EP 1 603 794 B1**
(45) Veröffentlichungstag und Bekanntmachung des Hinweises auf die Patenterteilung: **19.03.2008**
(21) Anmeldenummer: 03789208.0
(22) Anmeldetag: 09.12.2003
(51) Int. Cl.: B63B 1/38

(54) **WASSERFAHRZEUG UND VERFAHREN ZUR REIBUNGSVERMINDERUNG BEI WASSERFAHRZEUGEN**
BOAT AND METHOD FOR REDUCING FRICTION ON BOATS
BATEAU ET PROCEDE POUR LIMITER LES FROTTEMENTS SUBIS PAR BATEAUX

(30) Priorität: 24.02.2003 DE 10307795
(43) Veröffentlichungstag der Anmeldung: 14.12.2005
(73) Patentinhaber: New-Logistics GmbH, 49424 Goldenstedt (DE)
(72) Erfinder: WULF, Udo, G., 24147 Klausdorf (DE)
(74) Vertreter: Heim, Hans-Karl
(86) Internationale Anmeldenummer: PCT/EP2003/014005
(87) Internationale Veröffentlichungsnummer: WO 2004/074084

(56) Entgegenhaltungen:
- WO-A-99/28180
- GB-A- 810 769
- US-A- 3 016 865
- US-B1- 6 167 829

## Beschreibung

Die vorliegende Erfindung betrifft ein Wasserfahrzeug nach dem Oberbegriff des Anspruchs 1 und ein Verfahren zur Reibungsverminderung bei einem Wasserfahrzeug nach dem Oberbegriff des Anspruchs 8.

Ein gattungsgemäßes Wasserfahrzeug weist eine Kammer zum Aufnehmen und Fließen eines Gases zwischen einem Rumpf des Wasserfahrzeugs und dem Wasser auf. Diese virtuelle Kammer wird vom Rumpf und zwei seitlichen, am Rumpf angebrachten Führungskörpern ausgebildet. Außerdem ist mindestens eine Blas-Einrichtung zum strukturierten Einbringen eines Gases in die Kammer und mindestens eine Auffangeinrichtung zum wenigstens teilweisen Wiederaufnehmen des von der Blas-Einrichtung eingebrachten Gases vorgesehen.

Bei einem gattungsgemäßen Verfahren zur Reibungsverminderung bei einem Wasserfahrzeug wird Gas strukturiert zwischen einen Rumpf des Wasserfahrzeugs und das Wasser eingebracht und das eingebrachte Gas wird zumindest teilweise wieder aufgenommen.

Ein gattungsgemäßes Schiff und ein gattungsgemäßes Verfahren ist in WO 99/28180 beschrieben. Die Auffang-Einrichtung dient dort dazu, die in dem komprimierten Gas, das zwischen Schiffsrumpf und Wasser eingeleitet wird, enthaltene Energie zurückzugewinnen. Hierdurch kann Energie zur Kompression des Gases eingespart werden. Zur Führung des Gases unter dem Rumpf weist dieser seitliche Führungskörper auf.

Das Einblasen von Gas, insbesondere von Luft, auf der Unterseite eines Schiffsrumpfs, um dadurch eine Verminderung des Widerstands zu erzielen, ist bekannt. Dieses Prinzip wird auch als Luftschmierung bezeichnet.

Als schwierig hat sich in diesem Zusammenhang bei großen Schiffen erwiesen, möglichst an der gesamten Grenzfläche eine Gasschicht aufrechtzuerhalten. Diesbezüglich wird in US-6,145,459 vorgeschlagen, an mehreren Stellen entlang eines Schiffsrumpfs Blasen einzubringen.

In US-3,957,008 wird vorgeschlagen, über im Wesentlichen die gesamte Länge eines Schiffes Blasen elektrolytisch herzustellen.

In JP 100 35 578 A ist die Erzeugung sehr kleiner Bläschen durch poröse Platten beschrieben.

Ein weiteres gattungsgemäßes Wasserfahrzeug ist in GB 810, 769 beschrieben.

US-3,016,865 betrifft ein Unterwasserfahrzeug, bei dem an mehreren Stellen entlang des Rumpfs Luft ausgeblasen und wieder aufgenommen wird.

In US-6,167,829 ist ein Tragflächenboot beschrieben, bei dem, abhängig von der Geschwindigkeit des Boots, die Zahl der aktiven Blaseinrichtungen verändert wird.

Der vorliegenden Erfndung liegt die **Aufgabe** zugrunde, ein gattungsgemäßes Wasserfahrzeug und ein gattungsgemäBes Verfahren so weiterzubilden, dass eine reibungsvermindernde Schicht zwischen Wasser und Wasserfahrzeug möglichst zuverlässig aufrechterhalten wird.

Diese Aufgabe wird durch das Wasserfahrzeug mit den Merkmalen des Patentanspruchs 1 und durch das Verfahren mit den Merkmalen des Patentanspruchs 8 gelöst.

Vorteilhafte Ausgestaltungen des erfindungsgemäßen Wasserfahrzeugs und bevorzugte Weiterbildungen des erfindungsgemäßen Verfahrens sind Gegenstand der Unteransprüche.

Das Wasserfahrzeug der oben genannten Art ist erfindungsgemäß dadurch weitergebildet, dass sich die Blas-Einrichtungen und die Auffang-Einrichtungen jeweils über eine Breite der Kammer erstrecken, dass der Abstand zwischen einer Blas-Einrichtung und der zugeordneten Auffang-Einrichtung abhängig von einer Geschwindigkeit im oberen Geschwindigkeitsbereich des wasserfahrzeugs so gewählt ist, dass die Struktur des von der Blas-Einrichtung in die Kammer eingebrachten Gases bis zu dessen Wiederaufnahme durch die zugeordnete Auffang-Einrichtung im Wesentlichen erhalten bleibt, gemäβ Anspruch 1.

Das Verfahren der oben genannten Art ist erfindungsgemäß dadurch weitergebildet, dass das Gas mit einer Mehrzahl von Blas-Einrichtungen in eine Kammer zwischen den Rumpf und das Wasser eingebracht wird, wobei die Blas-Einrichtungen entlang einer Längsrichtung des Wasserfahrzeugs angeordnet sind und sich über eine Breite der Kammer erstrecken, dass das von einer Blas-Einrichtung eingebrachte Gas von einer der Blas-Einrichtung zugeordneten Auffang-Einrichtung nach einer Fließstrecke wieder aufgenommen wird, wobei der Abstand zwischen der Blas-Einrichtung und der zugeordneten Auffang-Einrichtung abhängig von einer Geschwindigkeit im oberen Geschwindigkeitsbereich des Wasserfahrzeugs so gewählt wird, dass die Struktur des Gases über die Flieβstrecke im Wesentlichen erhalten bleibt, gemäß Anspruch 8.

Als ein Kerngedanke der Erfindung kann angesehen werden, dass die Auffang-Einrichtuhg gezielt relativ zur Blas-Einrichtung so angeordnet wird, dass die Strukturierung des eingeblasenen Gases, beispielsweise die Größe und/oder der relative mittlere Abstand von eingebrachten Gasbläschen, zumindest über eine Fließstrecke weitestgehend erhalten bleibt. Im Unterschied dazu ist bei WO 99/28180 die Auffang-Einrichtung im Wesentlichen am Rumpfende des Schiffes angeordnet, wobei das Gas bugseitig eingeblasen wird. Grundgedanke ist also die Kontrolle und der Erhalt beispielsweise einer Struktur von Mikroblasen über eine Lauflänge der Blasen entlang eines Schiffsrumpfs über Einsammeln, Durchsieben und erneutes Einbringen.

Als ein erster wesentlicher Vorteil des erfindungsgemäßen Wasserfahrzeugs und des erfindungsgemäßen Verfahrens kann angesehen werden, dass über die Laufstrecke des Gases eine sehr gut definierte Grenzschicht zwischen einer Unterseite des Wasserfahrzeugs und dem Wasser bereitgestellt und damit die Reibung zwischen Wasserfahrzeug und Wasser in besonders gut definierter Weise reduziert wird.

Darüber hinaus kann bei dem erfindungsgemäßen Wasserfahrzeug und mit dem erfindungsgemäßen Verfahren auch eine Lagestabilisierung des Wasserfahrzeugs im Wasser erzielt werden, da die Grenzschicht zwischen Wasserfahrzeug und Wasser über die Laufstrecke weitestgehend dieselben Eigenschaften aufweist. Insbesondere können größere Blasen, die unkontrolliert einen Auftrieb verursachen würden und zu einer Schlagseite des Schiffs führen könnten, vermieden werden.

Um das Gas zwischen Wasserfahrzeug und Wasser einbringen zu können, muss es zumindest auf den in der entsprechenden Wassertiefe herrschenden hydrostatischen Druck komprimiert werden. Dies kann bei dem erfindungsgemäßen Wasserfahrzeug und dem erfindungsgemäßen Verfahren besonders energiesparend erfolgen, da mit der Wiederaufnahme des komprimierten Gases auch die darin enthaltene Energie zurückgewonnen werden kann.

Weiter ist die Blas-Einrichtung zum Erzeugen und Einbringen von Gasblasen, insbesondere von Mikroblasen, ausgebildet. Bei einer Schicht aus Gasblasen, insbesondere aus Mikroblasen, wird eine besonders deutliche Verminderung der Reibung zwischen Wasserfahrzeug und Wasser erzielt. Mit zunehmender Fließstrecke tendieren die Gasblasen jedoch dazu, sich miteinander zu immer größeren Blasen zu vereinigen, d.h. sozusagen zu verklumpen. Dem wirkt die erfindungsgemäße Anordnung der Auffangeinrichtung entgegen, die ein Wiederaufnehmen, beispielsweise von Mikrobla sen, ermöglicht, bevor diese sich in nennenswertem Umfang zu größeren Gasblasen vereinigen können. Einer Verschlechterung der Reibungsverminderung und einer eventuellen Lagedestabilisierung des Wasserfahrzeugs durch Gasmengen, die sich an der Unterseite vereinigen, wird auf diese Weise vorgebeugt.

Zur Erzeugung der Gasblasen weist die Blas-Einrichtung dabei zweckmäßig jeweils mindestens einen Sprühkörper mit einem porösen Keramik- und/oder Kunststoffkörper auf. Derartige Sprühkörper zum Erzeugen und Einbringen von kleinen Luftblasen, die beispielsweise auch in Aquarien verwendet werden, sind aus der Filter- und Abwasseraufbereitungstechnik bekannt und können ohne weiteren Entwicklungsaufwand eingesetzt werden. Kunststoffkörper sind dabei elastischer und weniger stoßempfindlich, wohingegen Keramikkörper bei längerem Aufenthalt im Hafen, wo die Sprühkörper nicht von Luft durchströmt werden, weniger zu Bewuchs neigen.

Prinzipiell können auch rohrförmige Keramikkörper zum Einsatz kommen. Um einen eventuellen Leistungsverlust wegen partieller Verstopfung ausgleichen zu können, stehen heute außerdem Keramikmaterialien mit einer Porenreserve zur Verfügung, die aktiviert wird, sobald ein äquivalenter Porenanteil einen erhöhten Druckverlust aufweist.

Um an einem möglichst großen Teil einer Grenzfläche zwischen Wasserfahrzeug und Wasser eine Gas- oder Gasblasengrenzschicht bereitzustellen, ist eine Mehrzahl von Blas-Einrichtungen und Auffang-Einrichtungen vorgesehen, wobei jeder Blas-Einrichtung jeweils mindestens eine Auffangeinrichtung zugeordnet ist. Die Blas-Einrichtungen und zugeordneten Auffang-Einrichtungen sind entlang einer Längsrichtung des Wasserfahrzeugs angeordnet.

Eine Kontrolle bzw. ein Erhalt der Gasblasen-Struktur über eine Lauflänge der Blasen entlang des Rumpfs des Wasserfahrzeugs wird über das Einbringen von Gasblasen an mehreren Stellen des Wasserfahrzeugs und das entsprechende Wiederaufnehmen durch die Auffangeinrichtungen, das auch als Einsammeln oder Durchsieben bezeichnet werden kann, erzielt. Die Blas-Einrichtungen und zugeordneten Auffang-Einrichtungen sind in bestimmten Abständen an dem Wasserfahrzeug angebracht, wobei die Abstände zwischen der Blas-Einrichtung und einer zugeordneten Auffang-Einrichtung abhängig von einer Geschwindigkeit, insbesondere von einer Normal- oder Maximalgeschwindigkeit, des Wasserfahrzeugs gewählt ist.

Um den Effekt der Reibungsverminderung in einem möglichst großen Bereich der Grenzfläche zwischen Wasserfahrzeug und Wasser zu erzielen, sind die Blas-Einrichtungen und/oder die Auffang-Einrichtungen bevorzugt so ausgebildet, dass sie sich jeweils im Wesentlichen über eine Breite des Wasserfahrzeugs erstrecken. Prinzipiell können sich Blas-Einrichtung und zugeordnete Auffang-Einrichtung über die gesamte Breite erstrecken.

Bei einer weiteren Variante des erfindungsgemäßen Wasserfahrzeugs ist eine Aufnahmeleistung der Auffang-Einrichtung, insbesondere abhängig von einem Gasausstoß der Blas-Einrichtung, veränderbar. Dabei kann eine besonders gute Strukturerhaltung des von der Blas-Einrichtung eingebrachten Gases, insbesondere von eingebrachten Gasblasen, erzielt werden.

Auch die Menge und die Struktur, beispielsweise die Blasengröße, des von der Blas-Einrichtung ausgestoßenen Gases kann veränderbar sein, wobei insbesondere eine Variabilität in Abhängigkeit der Geschwindigkeit in Betracht kommt.

Ferner kann zur Vermeidung eines Klumpens von Gasbläschen, d.h. zur. Vermeidung einer Vereinigung von Gasbläschen zu immer größeren Gasblasen, und/oder zur Führung des Gases die Unterseite des Wasserfahrzeugs wenigstens teilweise mit einer Strukturierung versehen sein.

Beispielsweise kann mit Hilfe einer Beschichtung mit einer Art Faserteppich, vergleichsweise einem Grünalgenflor auf Steinen im Bachbett, das Klumpen von Luftblasen verhindert werden und damit die positive Wirkung der Grenzschicht möglichst lange erhalten bleiben. Dies bedeutet, dass die Lauf- oder FlieBstrecken zwischen einer Blas-Einrichtung und einer zugeordneten Auffang-Einrichtung verlängert werden können, so dass insgesamt bei einem Wasserfahrzeug, beispielsweise bei einem Schiff, weniger Blas- und Auffang-Einrichtungen vorgesehen werden müssen und Kosten gespart werden können.

Zur Führung des Gases an der Unterseite des Wasserfahrzeugs kann die Strukturierung auch eine Mehrzahl von Wülsten und/oder Rillen, insbesondere in Längsrichtung des Schiffs, aufweisen. Dabei kann einerseits eine Vereinigung von Gasblasen, die in unterschiedlichen Rillen laufen, vermieden werden, andererseits wird durch ein Vermeiden eines Gasübertritts von einer Rille zur nächsten auch eine Lagestabilisierung für das Wasserfahrzeug erzielt. Ferner kann auch durch Wülste und/oder Rillen eine Verlängerung der Fließstrecke der Blasen und damit eine Reduzierung der insgesamt notwendigen Blas- und Auffang-Einrichtungen erzielt werden. Dieses Prinzip, das auch als Schmierrillenkonzept bezeichnet wird, ist auch bei Wellengang wirksam.

Eine Ausgestaltung des erfindungsgemäßen Wasserfahrzeugs sieht vor, dass jeweils eine Auffang-Einrichtung und eine Blas-Einrichtung modulartig zusammengefasst sind. Hierdurch kann in konstruktiv einfacher Weise eine Mehrzahl von Blas-Einrichtungen und Auffang-Einrichtungen beispielsweise an einem Boden eines Schiffsrumpfs angeordnet werden.

Mit entsprechenden Führungs- und Rillenstrukturen kann prinzipiell jeder Schiffstyp erfindungsgemäß ausgebildet sei. Bei einer besonders bevorzugten Variante ist das erfindungsgemäße Wasserfahrzeug aber als Semi-Katamaran, insbesondere zum Containertransport, ausgebildet. Zweckmäßig ist dabei zwischen mindestens zwei Seitenrümpfen eine Kammer zum Aufnehmen, Führen und Fließen des Gases gebildet. Ein Entweichen des Gases nach außen wird dabei zweckmäßig von den Seitenrümpfen verhindert.

Prinzipiell kann jedes beliebige Gas für das erfindungsgemäße Verfahren eingesetzt werden, wobei aber bevorzugt Luft verwendet wird.

Besonders gute Eigenschaften im Hinblick auf Reibungsreduzierung und Lagestabilisierung werden bei einer Variante des Verfahrens, erzielt, bei der das Gas schräg zu einer Längsrichtung des Wasserfahrzeugs, insbesondere symmetrisch zu beiden Seiten des Wasserfahrzeugs, ausgeblasen wird. Entsprechend kann dann auch eine schräge Strukturierung am Schiffsboden, beispielsweise in. Form von schräg angeordneten Rillen, vorgesehen sein.

Weitere Vorteile und Eigenschaften des erfindungsgemäßen Wasserfahrzeugs und des erfindungsgemäßen Verfahrens werden nachstehend unter Bezugnahme auf die beigefügten schematischen Figuren beschrieben.

Dort zeigen:
- Fig. 1: eine schematische durchbrochene Ansicht eines erfindungsgemäßen Schiffs;
- Fig. 2 bis 6: Details des in Fig. 1 gezeigten Schiffs;
- Fig. 7 bis 9: weitere Varianten eines erfindungsgemäßen Schiffs;
- Fig. 10: eine Variante des in Fig. 5 gezeigten Details und
- Fig. 11 -: eine schematische Darstellung eines Systems mehrerer Blas-Einrichtungen und zugeordneter Auffang-Einrichtungen.

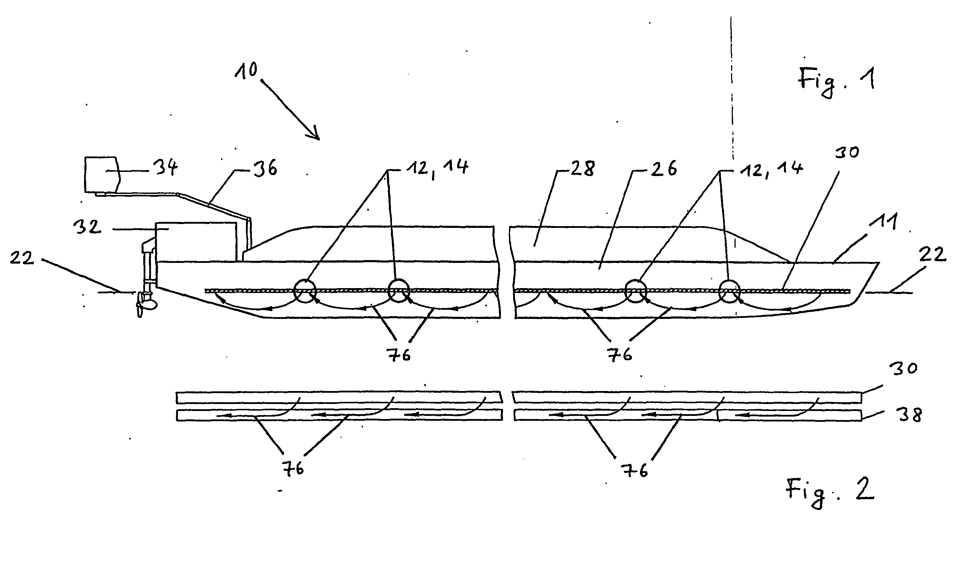

Fig. 1 zeigt ein als Semi-Katamaran ausgebildetes erfindungsgemäßes Schiff 10 mit Seitenrümpfen 26, von denen hier lediglich einer dargestellt ist, und mit einem T-förmigen Mittellängsträger 28 in Kastenbauweise. Am Heck des Schiffs 10 ist ein autarkes Antriebsmodul 32 und ein von einem dreh- und schwenkbaren Steuerhausarm 36 getragenes Steuerhaus 34 angeordnet. Eine Wasseroberfläche ist durch Striche 22 angedeutet. ,

An einem Kammerboden 30 für die Luftblasenschmierung sind an mehreren Positionen Blas-Einrichtungen 12 und Aufnahme-Einrichtungen 14 als Kontrolleinrichtungen für die Luftblasenschmierung vorgesehen, die jeweils modulartig zusammengefasst sind. Die Bewegungsrichtung von Luftblasen, die von den Blas-Einrichtungen ausgestoßen werden, ist durch Pfeile 76 angedeutet.

Der Kammerboden 30 ist, wie in Fig. 2 gezeigt, mit einem Kontroll- und Führungsbelag 38 für die Luftschmierung versehen. Hierbei kann es sich insbesondere um eine Beschichtung in der Art eines Faserteppichs handeln. Die Oberflächenstruktur eines solchen Faserteppichs wirkt ähnlich wie ein Grünalgenflor auf Steinen in einem Bachbett und verhindert das Klumpen von Luftblasen und erhält auf diese Weise die reibungsvermindernde Wirkung der Grenzschicht sehr lange aufrecht. Die Bewegungsrichtung der Gasblasen ist wiederum durch Pfeile 76 angedeutet.

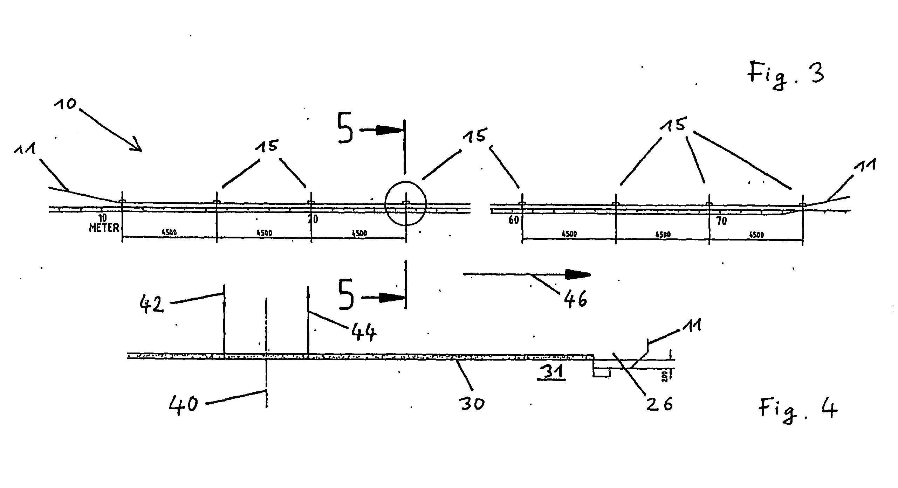

Eine schematische Detailansicht des in Fig. 1 gezeigten Schiffs 10 ist außerdem in Fig. 3 gezeigt, wobei die Blas-Einrichtungen 12 und die Aufnahme-Einrichtungen 14 jeweils äquidistant an Positionen 15 am Rumpf 11 angeordnet sind. Die Abstände, die z.B. etwa 4 bis 5 Meter betragen können, sind dabei jeweils in Abhängigkeit einer Geschwindigkeit des Schiffs 10 gewählt. Die Fahrtrichtung des Schiffs 10 ist durch einen Pfeil 46 angedeutet.

Fig. 4 zeigt einen Teilquerschnitt des in Fig. 1 dargestellten Schiffs 10, das als Semi-Katamaran ausgebildet ist. Der Rumpf 11 besteht dabei aus Seitenrümpfen 26, von denen in Fig. 4 lediglich einer dargestellt ist. Zwischen den Seitenrümpfen 26 befindet sich eine Kammer 31 zur Aufnahme und zum Führen des Gases, die nach oben von einem Kammerboden 30 begrenzt wird. Eine Zufluss- und eine Abflussrichtung des Gases ist durch Pfeile 42 bzw. 44 angedeutet. Eine Mittenachse des Schiffs 10 ist durch das Bezugszeichen 40 gekennzeichnet.

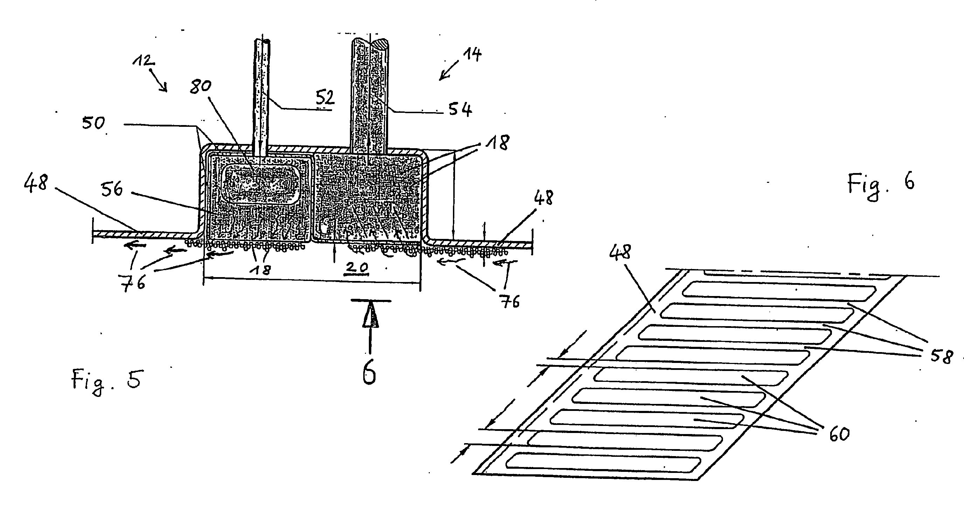

Fig. 5 zeigt eine Blas-Einrichtung 12 und eine Auffang-Einrichtung 14, die in einem Modul zusammengefasst und in einer Bodenvertiefung abgekapselt an einem Schiffsboden 48 angeordnet sind. Die Blas-Einrichtung 12 weist einen Sprühkörper bzw. Sprühstein 56 auf, der beispielsweise aus einem porösen Kunststoffmaterial oder Keramikmaterial gebildet ist. In einen Hohlraum 80 des Sprühsteins 56, der mit Hilfe eines Vergussmaterials 50 in einer Auswölbung des Schiffsbodens 48 befestigt ist, wird durch ein Rohr 52 Zuluft unter Druck eingeleitet, so dass sich dort ein Luftpolster ausbildet. Dieses Luftpolster führt dazu, dass auf einer Unterseite des Sprühsteins 56 Gasblasen 18 nach außen treten und sich entgegen der Fahrtrichtung des Schiffs in Richtung Heck durch Pfeile 76 angedeutet. Im rechten Bereich in Fig. 5 treten Gasblasen 18 in eine Auffang-Einrichtung 14 ein, die von einer am Schiff weiter in Richtung Bug angeordneten Blas-Einrichtung ausgestoßen wurden. Diese Gasblasen 18 werden von der Auffang-Einrichtung 14 aufgenommen oder eingesaugt und in einem Entlüftungsrohr 54 abgeführt.

Die Strömungsgeschwindigkeit des Wassers gegenüber dem Schiff ist durch den Pfeil 74 angedeutet und kann z.B. bis zu 7 Meter/Sekunde betragen.

Fig. 6 zeigt eine Ansicht des Schiffsbodens 48 in Richtung des Pfeils 6 in Fig. 5. Dargestellt ist eine Strukturierung des Schiffsbodens 48 mit Rillen 58 und Wülsten 60 in Längsrichtung des Schiffs, die auch als Führungs- und Strömungsrippen bezeichnet werden können. Diese Rillen 58 und Wülste 60 führen einerseits die von den Blas-Einrichtungen 12 ausgestoßenen Gasblasen und bewirken damit eine Lagestabilisierung des Schiffs und verhindern andererseits die Vereinigung der Gasblasen 18 untereinander zu größeren Blasen und ermöglichen somit eine längere Fließstrecke.

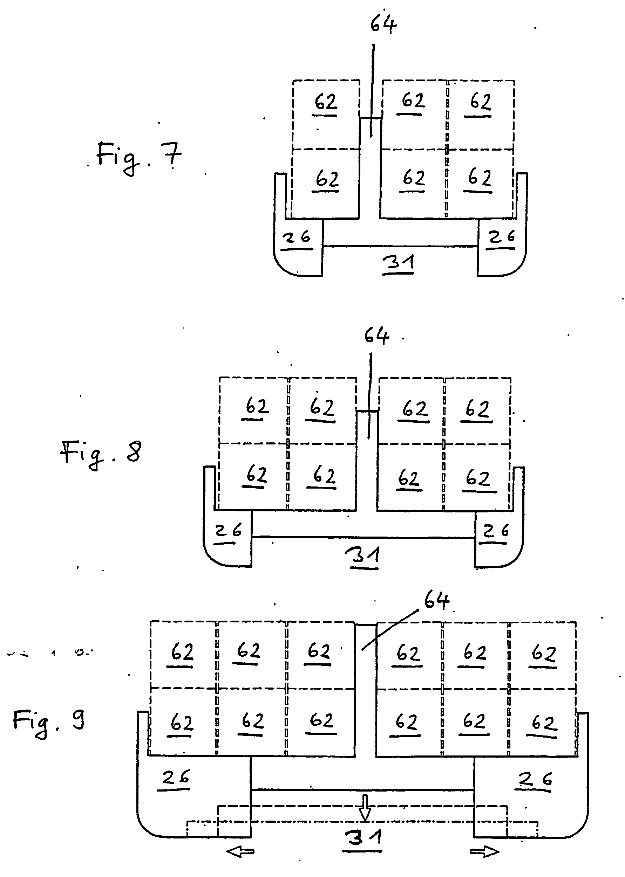

In den Fig. 7 bis 9 sind Varianten eines erfindungsgemäßen, als Semi-Katamaran ausgebildeten Containerschiffs gezeigt.

Die Varianten unterscheiden sich jeweils durch die Laderaumbreiten. Bei einer jeweils zweilagigen Beladung sind bei dem Schiff in Fig. 7 drei Containerreihen, in Fig. 8 vier Containerreihen und bei dem Schiff in Fig. 9 sechs Containerreihen vorgesehen. Bei jedem der Schiffe ist zwischen den beiden Seitenrümpfen 26 zur Stabilisierung der Container 62 eine Mittenwand 64 vorgesehen. Schließlich weist jedes der Schiffe aus den Fig. 7 bis 9 zwischen den Seitenrümpfen 26 eine Kammer 31 zum Führen und Aufnehmen des Gases auf. Diese Kammern 31 können, wie in Fig. 9 durch Pfeile angedeutetet, zur Optimierung des Auftriebs und der Luftschmierung auf die Einsatzprofile angepasst werden.

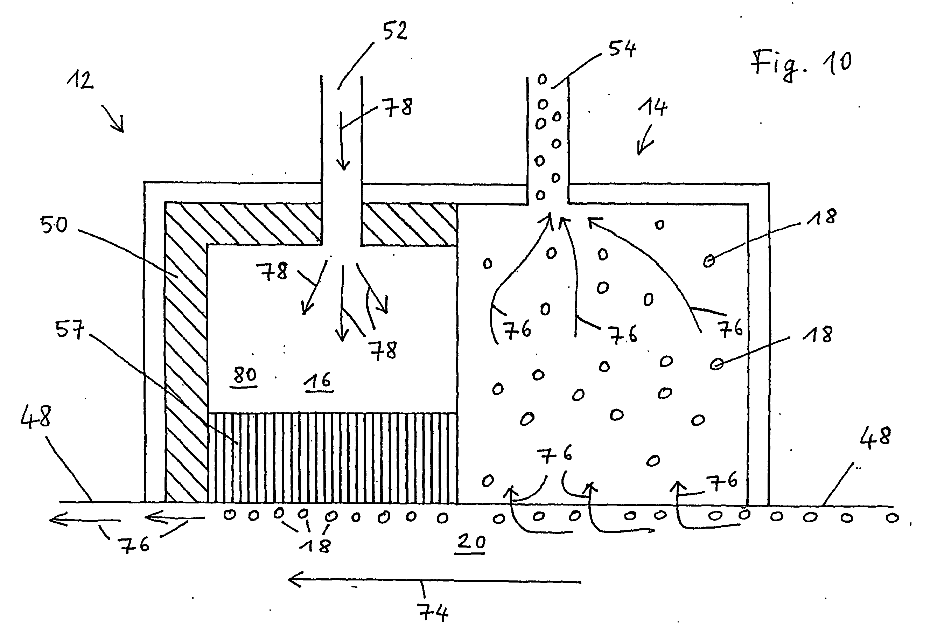

Fig. 10 zeigt eine Variante des in Fig. 5 dargestellten Details, wobei entsprechende Teile jeweils mit denselben Bezugszeichen gekennzeichnet ist. Die in Fig. 10 gezeigte Blas-Einrichtung unterscheidet sich von derjenigen aus Fig. 5 dadurch, dass zur Erzeugung der Mikroblasen ein flaches, poröses Belüftungselement 57, das wiederum aus einem porösen Keramik- oder Kunststoffmaterial gebildet sein kann, vorgesehen ist. Solche flachen Belüftungselemente 57 sind im Vergleich zu dem in Fig. 5 dargestellten Sprühstein 56 mit Hohlraum einfacher zu fertigen und daher kostengünstiger erhältlich. Weiterhin kann mit flachen Sprühsteinen eine besonders gute Druckverteilung und Ausstoßung der feinen Blasen erzielt werden. In den weiteren technischen Merkmalen und der Funktion entsprechen die in Fig. 10 gezeigte Blas-Einrichtung 12 und die Auffang-Einrichtung 14 den in Fig. 5 gezeigten Komponenten.

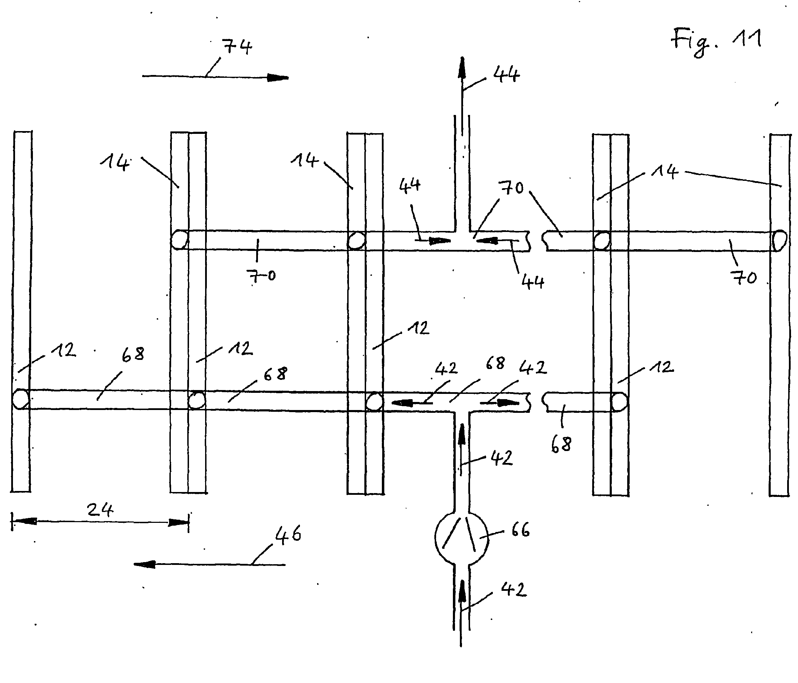

Ein System aus einer Mehrzahl von Blas-Einrichtungen 12 und Auffang-Einrichtungen 14 ist in Fig. 11 dargestellt. Die Blas-Einrichtungen 12 und die Auffang-Einrichtungen 14 sind jeweils länglich ausgebildet und erstrecken sich über die Breite der beispielsweise in den Fig. 7 bis 9 gezeigten Kammer 31. Abgesehen von einer bugseitig angeordneten Blas-Einrichtung 12 und einer heckseitig angeordneten Auffang-Einrichtung 14 sind jeweils eine Blas-Einrichtung 12 und eine Auffang-Einrichtung 14 zu einem Modul zusammengefasst. Diese Module können in der in den Fig. 5 und 10 dargestellten Weise am Schiffsboden angeordnet sein.

Den Blas-Einrichtungen 12 wird über Rohre 68 Druckluft zugeführt, die von einer Kompressionseinrichtung 66 bereitgestellt wird. Die Bewegungsrichtung der Luft ist durch Pfeile 42 gekennzeichnet.

In einem durch den Pfeil 24 angedeuteten Abstand von der bugseitigen Blas-Einrichtung 12 ist eine erste Auffang-Einrichtung 14 vorgesehen, mit welcher die von der bugseitigen Blas-Einrichtung 12 ausgestoßenen Gasblasen aufgefangen werden. Unmittelbar danach ist die nächste Blas-Einrichtung 12 vorgesehen, wobei wiederum nach einem Abstand 24 die zugeordnete Auffang-Einrichtung 14 folgt.

Die von den Auffang-Einrichtungen 14 aufgenommenen Gasblasen werden über Entlüftungsrohre 70 abgeführt, wobei eine Bewegungsrichtung der Luftblasen 44 gekennzeichnet ist. Die Bewegungsrichtung des Schiffs ist in Fig. 11 durch den Pfeil 46 und die Bewegungsrichtung des Wassers relativ zu den Blas-Einrichtungen 12 und den Auffang-Einrichtungen 14 durch den Pfeil 74 angedeutet.

Mit der in Fig. 11 gezeigten Anordnung kann im Wesentlichen über einen gesamten Kammerbereich 31 der beispielsweise in den Fig. 7 bis 9 gezeigten Schiffe eine gleichmäßige und gut definierte Zwischenschicht aus Gasblasen erreicht werden. Hierdurch wird eine hervorragende Reibungsverminderung bei gleichzeitiger Lagestabilisierung des Schiffs erzielt.

## Patentansprüche

1. Wasserfahrzeug, insbesondere Schiff, wobei der Rumpf (11) mindestens zwei seitliche Führungskörper (26) aufweist, mit einer zwischen den seitlichen Führungskörpern und dem Rumpf des Wasserfahrzeuges gebildeten Kammer (31) zum Aufnehmen und Fließen von Gasblasen in der Kammer zwischen den Führungskörpern des Wasserfahrzeuges (10) und dem Wasser (20),
mit mehreren Blas-Einrichtungen (12) zum Erzeugen und Einbringen der Gasblasen (18) und
mit mehreren Auffang-Einrichtungen (14) zum wenigstens teilweisen Wiederaufnehmen der eingebrachten Gasblasen (16), wobei jede Blas-Einrichtung (12) mindestens eine Sprühkörper-Einrichtung (56) aufweist und jeweils mindestens einer beabstandeten Auffang-Einrichtung (14) zugeordnet ist,
**dadurch gekennzeichnet,**
**dass** sich die Blas-Einrichtungen (12) und die Auffangeinrichtungen (14) jeweils über die Breite der Kammer (31) erstrecken,
wobei die Mehrzahl der Blas-Einrichtungen (12) und Auffang-Einrichtungen (14) entlang der Längsrichtung des Wasserfahrzeuges (10) angeordnet ist,
**dass** der Abstand zwischen einer Blas-Einrichtung (12) und der zugeordneten Auffang-Einrichtung (14) in Längsrichtung des Wasserfahrzeuges abhängig von der Geschwindigkeit des Wasserfahrzeuges (10) im oberen Geschwindigkeitsbereich des Wasserfahrzeuges (10) so gewählt ist,
**dass** die über die Sprühkörper-Einrichtung (56) der Blas-Einrichtung (12) als Mikroblasen eingebrachten Gasblasen (18) bis zu deren Wiederaufnahme durch die zugeordnete Auffang-Einrichtung (14) im Wesentlichen erhalten bleiben und
**dass** die Sprühkörper-Einrichtung (56) zur Erzeugung der Gasblasen mindestens einen Sprühkörper (56) mit einem porösen Keramik- und/oder Kunststoffkörper aufweist.

2. Wasserfahrzeug nach Anspruch 1,
**dadurch gekennzeichnet,**
**dass** eine Aufnahmeleistung der Auffang-Einrichtung (14), insbesondere abhängig von einem Gasausstoß der Blas-Einrichtung (12), veränderbar ist.

3. Wasserfahrzeug nach einem der Ansprüche 1 oder 2,
**dadurch gekennzeichnet,**
**dass** die Unterseite des Wasserfahrzeugs (10) zur Vermeidung eines Klumpens der Mikroblasen und/oder zur Führung des Gases wenigstens teilweise mit einer Strukturierung versehen ist.

4. Wasserfahrzeug nach Anspruch 3,
**dadurch gekennzeichnet,**
**dass** die Strukturierung eine Mehrzahl von Strömungsrippen (60) und/oder Rillen (58) und/oder eine, insbesondere teppichartige, Beschichtung aufweist.

5. Wasserfahrzeug nach einem der Ansprüche 1 bis 4,
**dadurch gekennzeichnet,**
**dass** jeweils eine Auffang-Einrichtung (14) und eine Blas-Einrichtung (12) modulartig zusammengefasst sind.

6. Wasserfahrzeug nach einem der Ansprüche 1 bis 5, welches als Semi-Katamaran ausgebildet ist.

7. Wasserfahrzeug nach Anspruch 6,
**dadurch gekennzeichnet,**
**dass** zwischen mindestens zwei Seitenrümpfen (26) die Kammer (31) zum Aufnehmen und Fließen des Gases gebildet ist.

8. Verfahren zur Reibungsverminderung bei einem Wasserfahrzeug, speziell einem Schiff,
bei dem Gasblasen (18) zwischen dem Rumpf (11) des Wasserfahrzeugs (10) und dem Wasser (20) eingebracht werden, und
bei dem die eingebrachten Gasblasen (16) zumindest teilweise wieder aufgenommen werden, wobei
a) die Gasblasen als Mikroblasen mittels einer Mehrzahl von Blas-Einrichtungen (12) durch Sprühkörper in eine Kammer (31) zur Aufnahme und zum Führen der Mikroblasen zwischen Rumpf (11) und dem Wasser (20) eingebracht werden,
b) die Kammer zwischen seitlichen Führungskörpern, die der Rumpf (11) aufweist, und dem Rumpf gebildet wird,
c) die Blas-Einrichtungen (12) entlang der Längsrichtung des Wasserfahrzeuges (10) angeordnet sind und sich über die Breite der Kammer (31) erstrecken,
d) die von einer Blas-Einrichtung (12) eingebrachten Mikroblasen (18) von einer jeder Blas-Einrichtung (12) zugeordneten und beabstandeten Auffang-Einrichtung (14), die sich über die Breite der Kammer (31) erstreckt, nach einer Fließstrecke (24) wieder aufgenommen werden,
e) der Abstand zwischen der Blas-Einrichtung (12) und der zugeordneten Auffang-Einrichtung (14) abhängig von einer Geschwindigkeit des Wasserfahrzeuges (10) im oberen Geschwindigkeitsbereich des Wasserfahrzeuges (10) so gewählt ist,
f) dass die Mikroblasen (18) über die Fließstrecke (24) im Wesentlichen erhalten bleiben.

9. Verfahren nach Anspruch 8,
**dadurch gekennzeichnet,**
**dass** als Gas Luft verwendet wird.

10. Verfahren nach einem der Ansprüche 8 oder 9,
**dadurch gekennzeichnet,**
**dass** die Mikroblasen schräg zur Längsrichtung des Wasserfahrzeugs, insbesondere symmetrisch zu beiden Seiten des Wasserfahrzeugs (10), ausgeblasen werden.

## Claims

1. Watercraft, particularly ship, in which the hull (11) has at least two lateral guide members (26),
with a chamber (31) formed between the lateral guide members and the hull of the watercraft for receiving and circulating gas bubbles in the chamber between the guide members of the watercraft (10) and the water (20),
having several blowing devices (12) for producing and introducing gas bubbles (18) and
having several collecting devices (14) for the at least partial taking up again of the introduced gas bubbles (16),
in which each blowing device (12) has at least one sprayer device (56) and is associated with at least one spaced collecting device (14),
**characterized in**
**that** the blowing devices (12) and collecting devices (14) in each case extend over the width of the chamber (31),
in which the plurality of blowing devices (12) and collecting devices (14) is positioned along the longitudinal direction of the watercraft,
**that** the distance between a blowing device (12) and associated collecting device (14) in the longitudinal direction of the watercraft is so selected as a function of the speed of the watercraft (10) in the upper speed range of said watercraft (10) that the gas bubbles (18) introduced as microbubbles via the sprayer device (56) of blowing device (12) are essentially maintained until they are taken up again by the associated collecting device (14) and
**that** the sprayer device (56) has at least one sprayer (56) with a porous ceramic and/or plastic body for producing the gas bubbles.

2. Watercraft according to claim 1,
**characterized in**
**that** the reception capacity of the collecting device (14) can be varied, particularly as a function of a gas discharge of blowing device (12).

3. Watercraft according to one of the claims 1 or 2,
**characterized in**
**that** for avoiding massing of microbubbles and/or for guiding the gas the underside of the watercraft (10) is provided at least partly with a structuring.

4. Watercraft according to claim 3,
**characterized in**
**that** the structuring has a plurality of flow ribs (60) and/or grooves (58) and/or an in particular carpet-like covering.

5. Watercraft according to one of the claims 1 to 4,
**characterized in**
**that** in each case one collecting device (14) and one blowing device (12) are combined in modular manner.

6. Watercraft according to one of the claims 1 to 5 constructed as a semi-catamaran.

7. Watercraft according to claim 6,
**characterized in**
**that** the chamber (31) for receiving and circulating the gas is formed between at least two lateral hulls (26).

8. Method for reducing friction in a watercraft, specifically a ship,
in which gas bubbles (18) are introduced between the hull (11) of watercraft (10) and the water (20) and
in which the introduced gas bubbles (16) are at least partly taken up again, wherein
a) the gas bubbles, as microbubbles, are introduced by means of a plurality of blowing devices (12) by sprayers into a chamber (31) for receiving and guiding the microbubbles between hull (11) and water (20),
b) the chamber is formed between lateral guide members of the hull (11) and said hull,
c) the blowing devices (12) are positioned along the longitudinal direction of the watercraft (10) and extend over the width of chamber (31),
d) the microbubbles introduced by a blowing device (12) are taken up again following a flow section (24) by a collecting device (14) associated with and spaced from each blowing device (12) and extending over the width of chamber (31),
e) the distance between the blowing device (12) and the associated collecting device (14) is so selected as a function of a speed of the watercraft (10) in the upper speed range of said watercraft (10)
f) that the microbubbles (18) are essentially maintained over the flow path (24).

9. Method according to claim 8,
**characterized in**
**that** air is used as the gas.

10. Method according to one of the claims 8 or 9,
**characterized in**
**that** the microbubbles are blown out obliquely to the longitudinal direction of the watercraft, particularly symmetrically on either side of said watercraft (10).

## Revendications

1. Bateau, en particulier navire, dans lequel la coque (11) présente
au moins deux corps de guidage latéraux (26), et une chambre (31) formée entre ces deux corps de guidage latéraux et la coque pour reprendre et écouler les bulles gazeuses dans la chambre entre les corps de guidage du bateau (10) et l'eau (20),
plusieurs dispositifs de soufflage (12) pour la production et l'introduction des bulles gazeuses (18), et
plusieurs dispositifs de collecte (14) pour reprendre au moins partiellement les bulles gazeuses introduites (16),
chaque dispositif de soufflage (12) présentant au moins un dispositif à corps de dispersion (56) associé à au moins un dispositif de collecte (14) placé à distance,
**caractérisé en ce que**
les dispositifs de soufflage (12) et les dispositifs de collecte (14) s'étendent sur la largeur de la chambre (31), la plupart des dispositifs de soufflage et des dispositifs de collecte (14) étant disposés dans la direction de la longueur du bateau (10),
la distance entre un dispositif de soufflage (12) et le dispositif de collecte associé (14), dans le sens de la longueur du bateau, est choisie en fonction de la vitesse du bateu (10) dans la domain supérieure de la vitesse du bateau (10), de façon que les bulles gazeuses (18), introduites comme des micro-bulles par le dispositif à corps de dispersion (56) du dispositif de soufflage (12), se conservent pour l'essentiel jusqu'à leur reprise par le dispositif de collecte associé (14), et
le dispositif à corps de dispersion (56) pour la production des bulles gazeuses présente au moins un corps de dispersion (56) poreux en céramique et/ ou en plastique.

2. Bateau selon la revendication 1,
**caractérisé en ce que**
la capacité de reprise du dispositif de collecte (14) est variable, en particulier en fonction du jet gazeux du dispositif de soufflage (12).

3. Bateau selon l'une des revendications 1 ou 2,
**caractérisé en ce que**
le dessous du bateau (10) est muni au moins en partie d'une structure pour éviter une agglomération de micro-bulles et/ou pour guider le gaz.

4. Bateau selon la revendication 3,
**caractérisé en ce que**
la structure présente une multitude de nervures d'écoulement (60) et/ou de rainures (58) et/ou un revêtement, en particulier un revêtement analogue à un tapis.

5. Bateau selon l'une des revendications 1 à 4,
**caractérisé en ce que**
un dispositif de collecte (14) et un dispositif de soufflage (12) forment chaque fois en un module.

6. Bateau selon l'une des revendications 1 à 5, qui est d'un semi-catamaran.

7. Bateau selon la revendication 6,
**caractérisé en ce qu'**
entre au moins deux coques latérales (26) la chambre (31) est formée pour reprendre et écouler le gaz.

8. Procédé pour diminuer le frottement d'un bateau, spécialement d'un navire,
dans lequel des bulles gazeuses (18) sont introduites entre la coque (11) du bateau (10) et l'eau (20) et
dans lequel les bulles gazeuses (16) introduites sont reprises au moins partiellement,
a) les bulles gazeuses sont introduites sous forme de micro-bulles, au moyen d'une multitude de dispositifs de soufflage (12), à travers des corps de dispersion, dans une chambre (31) pour reprendre et guider les micro-bulles entre la coque (11) et l'eau (20),
b) la chambre est formée entre la coque (11) et les corps de guidage latéraux qu'elle présente,
c) les dispositifs de soufflage (12) sont disposés sur la longueur du bateau (10) et s'étendent sur la largeur de la chambre (31),
d) les micro-bulles (18) introduites par un dispositif de soufflage (12), sont reprises après une section d'écoulement (24) par un dispositif de collecte (14), associé à chaque dispositif de soufflage (12) et placé à distance, il s'étend sur la largeur de la chambre (31),
e) la distance entre le dispositif de soufflage (12) et le dispositif de collecte (14) associé est choisie en fonction de une vitesse du bateau (10) dans la domain supérieure de la vitesse du bateau (10), de façon
f) que les micro-bulles (18) se conservent pour l'essentiel sur la section d'écoulement (24).

9. Procédé selon la revendication 8,
**caractérisé en ce que**
le gaz utilisé est de l'air.

10. Procédé selon l'une des revendications 8 ou 9,
**caractérisé en ce que**
les micro-bulles sont soufflées en oblique en direction de la longueur du bateau, en particulier symétriquement par rapport aux deux côtés du bateau (10).
